# EUROPÄISCHE PATENTANMELDUNG

(11) **EP 2 015 188 A1**
(43) Veröffentlichungstag der Anmeldung: **14.01.2009**
(21) Anmeldenummer: 08101332.8
(22) Anmeldetag: 06.02.2008
(51) Int. Cl.: G06F 12/06

(54) **Verfahren zur Erweiterung eines für ein Basis-Systemprogramm verfügbaren Speicherbereichs**

(30) Priorität: 08.02.2007 DE 102007006344
(71) Anmelder: Fujitsu Siemens Computers GmbH, 80807 München (DE)
(72) Erfinder: Freudenschuss, Reinhold, 86199, Augsburg (DE)
(74) Vertreter: Epping - Hermann - Fischer

(57) **Zusammenfassung**

Die Erfindung betrifft ein Verfahren zur Erweiterung eines für ein Basis-Systemprogramm verfügbaren Speicherbereichs. Das erfindungsgemäße Verfahren umfasst die Schritte:
- Starten (S1) des Basis-Systemprogramms,
- Auslösen (S2) eines Systemverwaltungs-Interrupts veranlasst durch das Basis-Systemprogramm, wobei eine Zentralrecheneinheit des Computers in einen Systemverwaltungs-Betriebszustand übergeht (S3), in dem eine Adresslogik der Zentralrecheneinheit einen Arbeitsspeicher des Computers als einen linearen Adressraum (3) adressiert,
- Ausführen (S5) von in den linearen Adressraum (3) kopierten Basis-Systemroutinen des Basis-Systemprogramms und
- Versetzen (57) der Zentralrecheneinheit in einen Normalbetriebszustand.

## Beschreibung

Die Erfindung betrifft ein Verfahren zur Erweiterung eines für ein Basis-Systemprogramm verfügbaren Speicherbereichs in einem Computer.

Das Basis-Systemprogramm des Computers, beispielsweise ein BIOS ("Basis Input Output System") steuert und regelt die Datenkommunikation zwischen einer Zentralrecheneinheit des Computers und peripheren Geräten. Beim Start des Computers regelt das BIOS den Einschaltvorgang bis zum Start des Betriebssystems.

Computerprogramme des BIOS werden beim Start des Computers aus einem Speicher, auch BIOS-Speicherbaustein genannt, in einen Speicherbereich eines logischen Adressraums des Arbeitsspeichers kopiert. Der logische Adressraum ist ein in Segmente geteilter linearer oder physikalischer Adressraum. Die einzelnen Segmente haben derzeit beispielsweise bei Zentralrecheneinheiten des Typs Intel x86 eine Kapazität von 64 kByte. Die einzelnen Segmente werden auch als A-Segment (Adressbereich von 000A:0000h bis 000A:FFFFh), B-Segment (Adressbereich von 000B:0000h bis 000B:FFFFh), etc. bezeichnet. Aus Kompatibilitätsgründen und um dem Anspruch eines Standards für IBM PC/XT/AT zu entsprechen, sind bestimmte Segmente im logischen Adressraum für spezielle Aufgaben reserviert.

Das E-Segment zusammen mit dem F-Segment (von 000E:0000h bis 000F:FFFFh) sind beispielsweise für das BIOS reserviert. Computerprogramme des BIOS werden aus dem oben genannten Speicher in diesen reservierten Speicherbereich mit einer Speicherkapazität von 128 kByte kopiert.

Aufgrund der ständigen Weiterentwicklung von Funktionen, die alle im BIOS gespeichert sein müssen, beispielsweise Powermanagement, neue Hardwarearchitekturen wie PCI oder PCI Express, Multiprozessoren, neue Betriebssystemfunktionen mit benötigter BIOS-Unterstützung, ist der reservierte Speicherbereich im logischen Adressraum (von 000E:0000h bis 000F:FFFFh) zu klein, um die Computerprogramme des BIOS vollständig hinterlegen zu können. Für einen Desktop-PC haben diese Computerprogramme beispielsweise eine Größe von 512 kByte - 1 MByte und sind in einem Flash ROM ("Read Only Memory") Speicher mit einer Speicherkapazität von 4 bis 8 MBit gespeichert.

BIOS- und Computer-Hersteller versuchen das Problem des zu klein gewordenen Speicherbereichs durch Komprimierung und Aufspaltung der Computerprogramme des BIOS in einzelne Funktionsblöcke zu lösen. Beispielsweise werden zuerst nur BIOS-Routinen, die zum Startzeitpunkt benötigt werden, aus dem Flash ROM Speicher in den reservierten Speicherbereich von 128 kByte kopiert und entpackt. Die Zentralrecheneinheit greift dann auf die dort gespeicherten BIOS-Routinen zu und führt diese aus. Nachdem die BIOS-Routinen ausgeführt sind, werden sie verworfen und durch andere Funktionsblöcke aus dem Flash ROM Speicher ersetzt. Dies verursacht wieder zusätzlichen BIOS-Programmcode, der das BIOS komplizierter und anfälliger für Fehlfunktionen macht.

In den Funktionsblöcken sind BIOS-Funktionen enthalten, die von dem Betriebsystem oder von Anwendungen benötigt werden. Das sukzessive Kopieren und Löschen von Funktionsblöcken in dem Speicherbereich von 000E:0000h bis 000F:FFFFh im logischen Adressraum soll so erfolgen, dass beim Start des Betriebssystems nur noch benötigte BIOS-Funktionen im reservierten Speicherbereich vorhanden sind. Allerdings darf die benötigte Speicherkapazität der BIOS-Funktionen die verfügbare Größe von 128 kByte nicht überschreiten.

Eine BIOS-Funktion wird beispielsweise aufgerufen, wenn das Betriebssystem oder die Anwendung eine Tastatureingabe erfordert. Dabei wird aus dem reservierten Speicherbereich die BIOS-Funktion (für die Tastatureingabe) an einer vorbestimmten logischen Adresse, auch Einsprungadresse genannt, aufgerufen. Üblicherweise ist jede BIOS-Funktion an einer speziellen für die BIOS-Funktion bestimmten Einsprungadresse in dem reservierten Speicherbereich von 000E:0000h bis 000F:FFFFh im logischen Adressraum hinterlegt. Computerprogramme von Anwendungen oder vom Betriebssystem enthalten Verweise auf diese sich nicht verändernden Einsprungadressen. Diese Vorgehensweise gehört zum IBM PC/XT/AT Standard.

Aufgabe der Erfindung ist es, ein Verfahren zur Erweiterung eines für ein Basis-Systemprogramm verfügbaren Speicherbereichs in einem Computer anzugeben, sodass eine ausreichende Speicherkapazität für Computerprogramme des Basis-Systemprogramms vorhanden ist.

Diese Aufgabe wird durch Verfahren gemäß einem der Ansprüche 1 oder 3 gelöst.

Erfindungsgemäß ist vorgesehen, dass das Basis-Systemprogramm nach dem Start einen SMI auslöst, wodurch eine Zentralrecheneinheit des Computers in einen Systemverwaltungs-Betriebszustand übergeht, in dem eine Adresslogik der Zentralrecheneinheit den Arbeitsspeicher des Computers als einen linearen Adressraum adressiert. In dem linearen Adressraum werden Basis-Systemroutinen des Basis-Systemprogramms ausgeführt, welche zuvor dorthin kopiert wurden. Die Zentralrecheneinheit wird danach wieder in einen Normalbetriebszustand versetzt.

Dieser Gebrauch eines SMI durch das Basis-Systemprogramm entspricht nicht seiner Bestimmung. Normalerweise wird ein SMI durch das Betriebssystem ausgelöst, wenn z.B. eine Schnittstelle angesprochen werden soll. Nach der Erfindung wird der SMI dagegen eingesetzt, beispielsweise beim Booten des Rechner, also bevor ein Betriebssystem gestartet wird, um den für das Basis-Systemprogramm verfügbaren Speicher zu vergrößern.

Der erfindungsgemäße Gebrauch eines SMI ermöglicht dem Basis-Systemprogramm, den gesamten auszuführenden Code gleichzeitig in den Speicher zu laden und dort auszuführen. Die lineare Adressierung vereinfacht den Aufbau des Basis-Systemprogramms.

Der Vorteil der Erfindung ist, dass Daten aus dem Speicher für das Basis-Systemprogramm, beispielsweise aus einem Flash ROM Speicher, beim Start des Computers vollständig in einen Basis-Speicherbereich in dem linearen Adressbereich des Arbeitsspeichers kopiert werden. Ein weiterer Vorteil der Erfindung ist, dass ein aufwändiges Aufteilen des Basis-Systemprogramms, wie nach dem Stand der Technik in einzelne Blöcke, die nacheinander kopiert und entpackt werden müssen, entfällt. Dadurch entstehen auch weniger Probleme durch Wechselwirkungen mit anderer Firmware, die gegebenenfalls auch die gleichen Segmente im logischen Adressraum des Arbeitsspeicherbereichs benutzt. Ein weiterer Vorteil ist, dass Erweiterungen des Basis-Systemprogramms einfach integrierbar sind und nicht durch einen limitierten Speicherbereich von 000E:0000h bis 000F:FFFFh im logischen Adressraum beschränkt werden.

Im Folgenden werden Definitionen und Erklärungen für verwendete Begriffe und technische Sachverhalte angegeben und danach wird auf weitere Vorteile der Erfindung sowie weitere vorteilhafte Weiterbildungen und Ausführungen eingegangen.

Das Basis-Systemprogramm organisiert die Datenkommunikation zwischen der Zentralrecheneinheit des Computers und angeschlossenen peripheren Geräten.

Der Systemverwaltungs-Interrupt (SMI) wird üblicherweise durch einen Schreibbefehl der Zentralrecheneinheit auf ein Ein-/Ausgaberegister ausgelöst und steht nur dem Basis-Systemprogramm zur Verfügung. Der Systemverwaltungs-Interrupt ist beispielsweise integraler Bestandteil jeder X86-Architektur, auf der heutige Computer basieren, gehört zum Standard und wird in allen X86-kompatiblen Zentralrecheneinheiten sowie den dabei verwendeten Chipsätzen (Intel, AMD etc.) unterstützt.

Der SMI versetzt die Zentralrecheneinheit des Computers in einen Systemverwaltungs-Betriebszustand. Im Systemverwaltungs-Betriebszustand wird die Adresslogik der 2entralrecheneinheit in einen linearen und nicht segmentierten Adressmodus gezwungen. Dieser lineare Adressraum ist beispielsweise ein von der ersten bis zur letzten Adresse zusammenhängender linearer Adressraum. Da er nicht in Segmente aufgeteilt ist, hat er eine viel größere Speicherkapazität als der logische Adressraum, der segmentiert ist. Beispielsweise steht bis zu 4 GByte Speicherkapazität für das Basis-Systemprogramm zur Verfügung. Zum Vergleich ist der reservierte Bereich für das Basis-Systemprogramm im logischen Adressraum dem Standard entsprechend nur 128 kByte.

Der Basis-Speicherbereich ist ein Speicherbereich in dem linearen Adressraum. Die Daten, die aus dem Speicher für das Basis-Systemprogramm in den Basis-Speicherbereich kopiert werden, sind beispielsweise Basis-Systemroutinen. Die Basis-Systemroutinen werden nach dem Start des Basis-Systemprogramms von der Zentralrecheneinheit beispielsweise eines Desktop-PC ausgeführt. Die Basis-Systemroutinen werden beispielsweise in dem Basis-Speicherbereich ausgeführt. Das heißt, dass die Zentralrecheneinheit auf die Basis-Systemroutinen an der jeweiligen Adresse im Basis-Speicherbereich zugreift und diese ausführt.

Im Normalbetriebzustand hat die Zentralrecheneinheit des Computers eine Adresslogik, die den Arbeitsspeicher als logischen Adressraum adressiert.

Im Systemverwaltungs-Betriebszustand arbeitet die Zentralrecheneinheit beispielsweise in einem linearen so genannten "Flatmodell" und unterliegt nicht mehr den 64 KByte-Segment-Limitierungen. Dadurch sind Inter-Segmentaufrufe im Basis-Systemprogramm nicht mehr nötig, welche nur durch aufwändige Computerprogramme zu ermöglichen sind. Durch das Wegfallen solcher Computerprogramme ist das Basis-Systemprogramm erheblich vereinfacht.

Ein weiterer Vorteil der Erfindung ist, dass der Basis-Speicherbereich ein gesicherter Bereich des Arbeitsspeichers ist. Befindet sich die Zentralrecheneinheit in dem Systemverwaltungs-Betriebszustand, kann dieser nicht von einem Betriebssystem des Computers oder einer Anwendung aufgehoben oder verhindert werden. Ein weiterer Vorteil des Systemverwaltungs-Betriebszustands ist, dass dieser für das Betriebssystem sowie für die Anwendersoftware transparent und somit nicht erkennbar ist. Im Systemverwaltungs-Betriebszustand werden die Arbeitsregister der Zentralrecheneinheit automatisch gesichert und beim Verlassen des Systemverwaltungs-Betriebszustandes restauriert.

Basis-Systemfunktionen werden vom Betriebssystem des Computers oder von den Anwendungen gebraucht. Zu den Basis-Systemfunktionen werden auch noch Laufzeitenroutinen benötigt, da sie während der Laufzeit des Betriebssystems verwendet werden.

In einer vorteilhaften Weiterbildung werden Einsprungadressen von Basis-Systemfunktionen aus dem Speicher für das Basis-Systemprogramm in einen Standardspeicherbereich kopiert, wobei der Standardspeicherbereich ein vorbestimmter Speicherbereich (beispielsweise von 000E:0000h bis 000F:FFFFh) im logischen Adressraum des Arbeitsspeichers ist. Der Vorteil ist, dass nur benötigte und nach dem Standard auch kompatible Einsprungadressen für die Basis-Systemfunktionen im Standardspeicherbereich im logischen Adressraum gespeichert sind. Der benötigte Standardspeicherbereich ist somit sehr klein. Ein weiterer Vorteil ist, dass der Standardspeicherbereich reduziert werden kann und beispielsweise als optionaler Speicherbereich für Adapterkarten des Computers zur Verfügung steht.

In einer weiteren vorteilhaften Ausführung umfasst der Basis-Speicherbereich einen oberen Speicherbereich des linearen Adressraums des Arbeitsspeichers, auch "top-of-memory" genannt.

Der Vorteil hierbei ist, dass beispielsweise das Betriebssystem in einem unteren Speicherbereich im linearen Adressraum des Arbeitsspeichers hinterlegt ist, und der Basis-Speicherbereich den für das Betriebssystem reservierten Speicherbereich nicht belegt.

Die Aufgabe wird auch gelöst durch ein Verfahren zur Erweiterung eines für ein Basis-Systemprogramm verfügbaren Speicherbereichs in einem Computer mit den Schritten:
- Starten des Basis-Systemprogramms,
- Versetzen einer Zentralrecheneinheit des Computers in einen Normalbetriebszustand,
- Kopieren von Einsprungadressen von Basis-Systemfunktionen aus einem Speicher für ein Basis-Systemprogramm in einen Standardspeicherbereich in einem logischen Adressraum des Arbeitsspeichers des Computers,
- Start eines Betriebsystems des Computers,
- Aufruf einer der Basis-Systemfunktionen durch das Betriebssystem oder eine Anwendung,
- Ausführen eines Schreibzugriffs auf ein Ein-/AusgabeRegister des Computers,
- Auslösen eines Systemverwaltungs-Interrupts,
- Übergang der Zentralrecheneinheit in den Systemverwaltungs-Betriebszustand,
- Ausführen einer Ausführungsroutine für Basis-Systemfunktionen in dem Basis-Speicherbereich,
- Ausführen der aufgerufenen Basis-Systemfunktion und
- Versetzen der Zentralrecheneinheit in einen Normalbetriebszustand.

Der Vorteil ist, dass die Basis-Systemfunktionen in einen Basis-Speicherbereich des linearen Adressraums des Arbeitsspeichers kopiert werden, wobei im Basis-Speicherbereich genügend Speicherkapazität vorhanden ist, um die Basis-Systemfunktionen vollständig zu speichern. Im Standardspeicherbereich im logischen Adressraum des Arbeitsspeichers sind lediglich die Einsprungadressen kopiert.

In einer weiteren vorteilhaften Ausführung wird beim Aufruf der Basis-Systemfunktion über ein frei definierbares Interface ein Indexvektor hinterlegt, wobei der Indexvektor die Art der Basis-Systemfunktion festlegt. Der Vorteil ist, dass an der Einsprungadresse nur ein Schreibbefehl zum Schreiben des Indexvektors hinterlegt ist, der die aufgerufene Basis-Systemfunktion kennzeichnet.

In einer weiteren vorteilhaften Ausführungsform startet die Zentralrecheneinheit im Systemverwaltungs-Betriebszustand an einer vorbestimmten Startadresse im Basis-Speicherbereich, der durch die kopierten Daten des Basis-Systemprogramms vorbelegt ist.

In einer weiteren vorteilhaften Ausführungsform ist die Zuordnung zwischen Basis-Systemfunktion und Indexvektor über eine Verwaltungstabelle im Basis-Systemprogramm festgelegt. Der Vorteil hierbei ist, dass die Zentralrecheneinheit beim Ausführen der Ausführungsroutine über die Verwaltungstabelle den Indexvektor der auszuführenden Basis-Systemfunktion zuordnet und diese an der entsprechenden Adresse im Basis-Speicherbereich im linearen Adressraum aufruft und ausführt.

Weitere vorteilhafte Ausgestaltungen der Erfindung sind in den Unteransprüchen angegeben.

Die Erfindung wird nachfolgend anhand von Ausführungsbeispielen näher erläutert. Es zeigen:
- Figur 1: eine schematische Zeichnung eines Arbeitsspeichers,
- Figur 2: eine schematische Zeichnung eines Arbeitsspeichers nach dem Stand der Technik,
- Figur 3: ein Flussdiagramm eines erfindungsgemäßen Verfahrens für den Start eines Computers und
- Figur 4: ein Flussdiagramm eines erfindungsgemäßen Verfahrens für den Start des Betriebssystems.

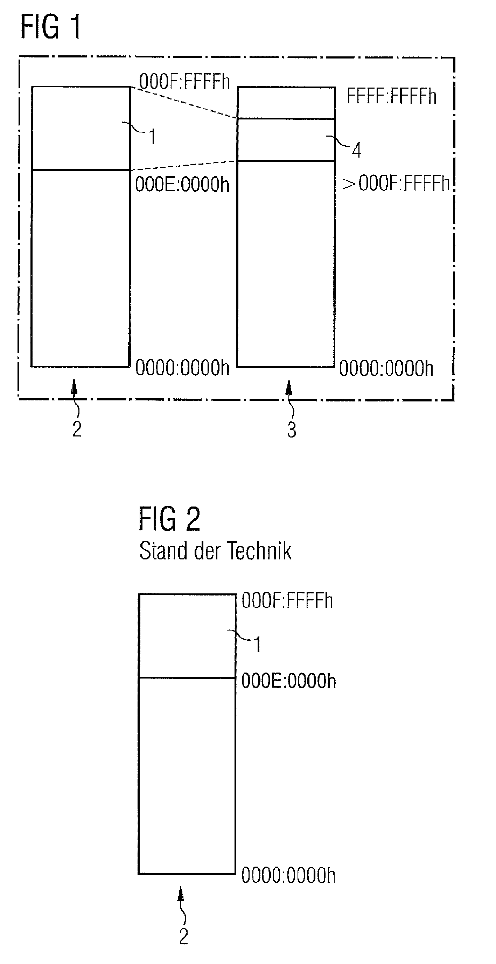

Figur 1 zeigt schematisch einen Arbeitsspeicher eines Computers, beispielsweise eines Desktop-PCs, jeweils mit einem logischen Adressraum 2 und einem linearen Adressraum 3.

Der logische Adressraum 2 des Arbeitsspeichers ist in Segmente von jeweils 64 kByte aufgeteilt. Ein Standardspeicher 1 ist im oberen logischen Adressraum für Einsprungadressen von Basis-Systemfunktionen eines Basis-Systemprogramms, beispielsweise BIOS oder "Extensible Firmware Interface" (EFI) des Computers reserviert. Das Basis-Systemprogramm beinhaltet beispielsweise die Firmware, also Computerprogramme für die Komponenten des Computers für den Einschaltvorgang bis zum Start des Betriebssystems.

Der Standardbereich 1 umfasst in diesem Ausführungsbeispiel das E- und F-Segment von 000E:0000h bis 000F:FFFFh und hat eine Größe von 128 kByte, so dass er dem IBM PC/XT/AT Standard entspricht.

Die anderen Speicherbereiche im logischen Adressraum 2 sind für die Firmware von Adapterkarten, beispielsweise der Grafikkarte, SCSI, LAN und anderen reserviert. Beispielsweise ist das A-Segment (0000:0000h bis 000A:FFFFh) für Firmware der Grafikkarte reserviert. Das B-Segment (0008:0000h bis 0008:FFFh) ist beispielsweise für einen Bildspeicher des Computersystems und das dem C-Segment bis D-Segment für Firmware von Adapterkarten reserviert. In diesem Ausführungsbeispiel ist es möglich, den Standardbereich 1 zu verkleinern, da die Einsprungadressen geringe Speicherkapazität benötigen. Der freigewordene Speicherbereich kann als zusätzlicher reservierter Speicherbereich für die Firmware von beispielsweise Adapterkarten vorgesehen werden.

Im Standardspeicher 1 sind in diesem Ausführungsbeispiel die Einsprungadressen für Basis-Systemfunktionen gespeichert, die von einem Betriebssystem des Computers aufgerufen werden. Das Betriebssystem ist beispielsweise DOS, Linux oder Windows. An der Einsprungadresse wird ein Schreibbefehl hinterlegt. Beim Zugriff auf die Einsprungadresse wird ein Indexvektor über ein frei definierbares Interface beispielsweise in ein Register der Zentralrecheneinheit (CPU-Register) oder in ein Scratch-Pad Register eines Chips des Computers geschrieben.

Im oberen Speicherbereich des linearen Adressraums 3 des Arbeitsspeichers ist ein Basis-Speicherbereich 4 angeordnet. In diesem Ausführungsbeispiel beginnt der Basis-Speicherbereich 4 mit einer definierten Startadresse, die größer als die lineare Adresse 000F:FFFFh ist. Der Speicherbereich ist vorteilhafterweise im oberen Speicherbereich des linearen Adressraums 3 des Arbeitsspeichers, der sich in diesem Ausführungsbeispiel bis zur linearen Adresse FFFF:FFFFh erstreckt. Der lineare Adressraum 3 ist ein virtueller von der ersten 0000:0000h bis zur letzten linearen Adresse FFFF:FFFFh zusammenhängender linearer Adressraum 3. Dies ist ermöglicht durch die so genannte Seitenverwaltung. Sie ermöglicht einen linearen Adressraum 3, der größer sein kann als die Menge der real im Arbeitsspeicher vorhandenen Arbeitsspeicherzellen. Der lineare Adressraum 3 kann größer sein als der physikalische Adressraum des Arbeitsspeichers. Wird die Seitenverwaltung vom Computer nicht unterstützt oder ist sie abgeschaltet, sind physikalischer und linearer Adressraum 3 identisch.

Der Basis-Speicherbereich 4 ist von den aus dem Speicher für das Basis-Systemprogramm kopierten Daten belegt. Der Speicher für das Basis-Systemprogramm ist in diesem Ausführungsbeispiel ein Flash ROM Speicherbaustein mit 4-8 MBit Speicherkapazität. Werden die Daten aus dem Speicher für das Basis-Systemprogramm vollständig in den Basis-Speicherbereich kopiert, wird in diesem Ausführungsbeispiel eine Speicherkapazität von 512 kByte - 1 MByte benötigt. Der lineare Adressraum 3 hat eine Größe von 4 GByte, so dass es möglich ist, auch umfangreiche Basis-Systemfunktionen, wie beispielsweise für das so genannte "Advanced Configuration and Power Interface (ACPI)" in den Basis-Speicherbereich zu kopieren. Das ACPI ist ein offener Industriestandard für Energieverwaltung in Desktop-PCs, Notebooks und Servern und benötigt die Unterstützung des Basis-Systemprogramms.

Figur 2 zeigt einen Arbeitsspeicher eines Computers mit einem logischen Adressraum 2 wie nach dem Stand der Technik. Ein Standardspeicherbereich 1 umfasst die E- und F-Segmente des segmentierten logischen Adressraums 2. Die Speicherkapazität des Standardspeicherbereichs ist 128 kByte. Nach dem Stand der Technik werden beim Start eines Basis-Systemprogramms dessen Computerprogramme sukzessive in diesen Standardspeicher 1 kopiert und entpackt. Nach Beenden der Ausführung beispielsweise einer Basis-Systemroutine muss diese gelöscht werden, um Platz für die nächste auszuführende Basis-Systemroutine zu schaffen. Vor dem Start des Betriebsystems müssen alle Basis-Systemfunktionen, die vom Betriebssystem oder einer Anwendung gebraucht werden, in diesem Standardbereich 1 gespeichert sein.

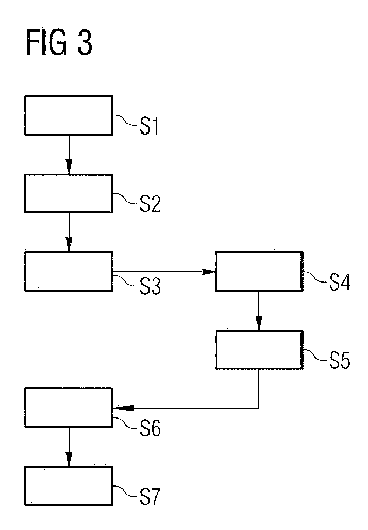

Figur 3 zeigt ein Flussdiagramm eines erfindungsgemäßen Verfahrens beim Start des Computers.

In einem Schritt S1 wird ein Basis-Systemprogramm eines Computers gestartet und in einem Schritt S2 wird ein Systemverwaltungs-Interrupt ausgelöst. In einem Schritt S3 wird eine Zentralrecheneinheit eines Computers in einen Systemverwaltungs-Betriebszustand versetzt. Im Systemverwaltungs-Betriebszustand wird ein Arbeitsspeicher des Computers über eine Adresslogik der Zentralrecheneinheit als linearer Adressraum 3 adressiert.

In einem Schritt S4 werden Daten aus einem Speicher für das Basis-Systemprogramm in einen Basis-Speicherbereich 4 im linearen Adressraum 3 kopiert. Die Zentralrecheneinheit führt in einem Schritt S5 Basis-Systemroutinen aus und startet an einer Startadresse im Basis-Speicherbereich. Wenn das Basis-Systemprogramm alle Routinen ausgeführt hat, wird in einem Schritt S6 der Systemverwaltungs-Betriebszustand beendet und die Zentralrecheneinheit in einem Schritt S7 in einen Normalbetriebszustand versetzt. Der Arbeitsspeicher hat dann einen logischen Adressraum 2.

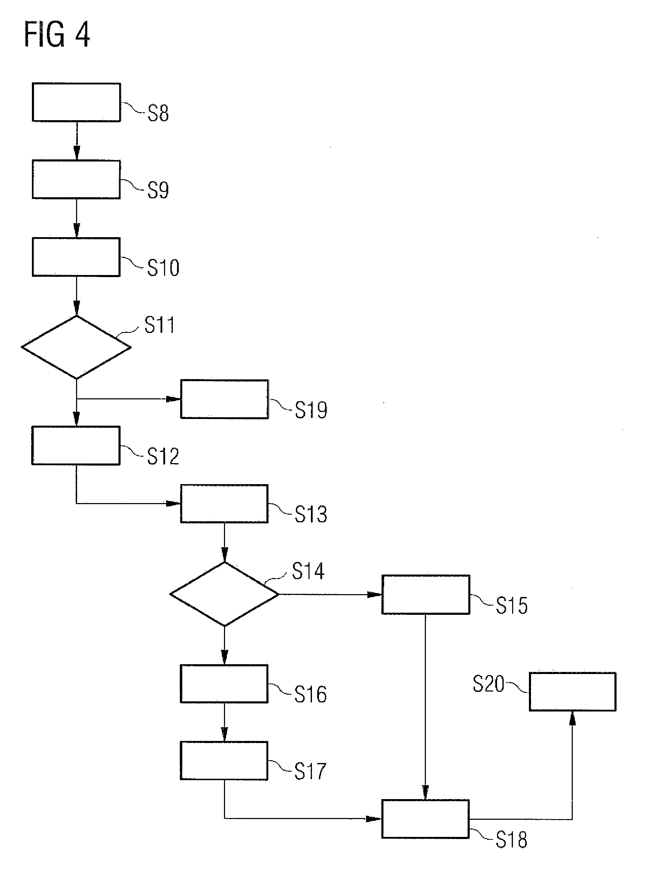

Figur 4 zeigt ein Flussdiagramm eines erfindungsgemäßen Verfahrens für den Start eines Betriebssystems eines Computers.

Nach dem Standard müssen im Standardspeicherbereich 1 des logischen Adressraums 2 die kompatiblen Einsprungadressen hinterlegt werden, die vom Betriebssystem und von IBM PC kompatibler Anwendungssoftware benutzt werden. In einem Schritt S8 werden die Einsprungadressen aus dem Speicher für das Basis-Systemprogramm in den Standardspeicher 1 kopiert. In einem Schritt S9 wird an der jeweiligen Einsprungadresse für die Basis-Systemfunktion ein Schreibbefehl für einen Indexvektor hinterlegt.

In einem Schritt S10 wird ein Betriebssystem gestartet. In einem Schritt S11 wird geprüft, ob eine der Basis-Systemfunktionen aufgerufen wird. Bei positiver Feststellung erfolgt in einem Schritt S12 ein Schreibzugriff auf ein Ein-/Ausgabe Register und es wird ein Systemverwaltungs-Interrupt ausgelöst. Gleichzeitig wird in einem Schritt S19 über ein Interface ein Indexvektor hinterlegt, beispielsweise in einem Register der Zentralrecheneinheit oder in einem Scratch-Pad-Register.

In einem Schritt S13 geht die Zentralrecheneinheit in den Systemverwaltungs-Betriebszustand über und startet an der Startadresse im Basis-Speicherbereich 4. Hier überprüft in einem Schritt S14 eine Ausführungsroutine, ob und welcher Indexvektor über das Interface geschrieben wurde. Wird kein Indexvektor gefunden, wird in einem Schritt S15 ein Fehlerwert ausgegeben. Wird im Schritt S14 ein Indexvektor gefunden, wird in einem Schritt S16 anhand einer Verwaltungstabelle die auszuführende Basis-Systemfunktion ermittelt. Dabei entspricht ein bestimmter hinterlegter Wert eindeutig einer auszuführenden Basis-Systemfunktion.

In einem Schritt S17 wird die aufgerufene Basis-Systemfunktion ausgeführt. Nach Beenden der Ausführung der Basis-Systemfunktion, beispielsweise ein Zeichen von der Tastatur zu lesen, wird die Zentralrecheneinheit in einem Schritt S18 aus dem Systemverwaltungs-Betriebszustand in den Normalbetriebszustand versetzt. Das Ergebnis oder der Fehlerwert aus Schritt S15 wird in einem Schritt S20 an das aufrufende Betriebssystem oder die Anwendung übergeben, beispielsweise in ein Register zurückgeschrieben.

### Bezugszeichenliste

- 1: Standardspeicherbereich
- 2: logischer Adressraum
- 3: linearer Adressraum
- 4: Basis-Speicherbereich

- S1-S20: Verfahrensschritte

## Patentansprüche

1. Verfahren zur Erweiterung eines für ein Basis-Systemprogramm verfügbaren Speicherbereichs in einem Computer mit den Schritten:
- Starten (S1) des Basis-Systemprogramms,
- Auslösen (S2) eines Systemverwaltungs-Interrupts veranlasst durch das Basis-Systemprogramm, wobei eine Zentralrecheneinheit des Computers in einen Systemverwaltungs-Betriebszustand übergeht (S3), in dem eine Adresslogik der Zentralrecheneinheit einen Arbeitsspeicher des Computers als einen linearen Adressraum (3) adressiert,
- Ausführen (S5) von in den linearen Adressraum (3) kopierten Basis-Systemroutinen des Basis-Systemprogramms und
- Versetzen (57) der Zentralrecheneinheit in einen Normalbetriebszustand.

2. Verfahren nach Anspruch 1,
**dadurch gekennzeichnet, dass** der Adressraum, in welchen die Basis-Systemroutinen kopiert wurden, einen oberen Speicherbereich des linearen Adressraums (3) des Arbeitsspeichers umfasst.

3. Verfahren zum Ausführen von Basis-Systemfunktionen aus einem erweiterten Speicherbereich eines Basis-Systemprogramms durch ein Betriebssystem oder eine Anwendung in einem Computer mit den Schritten:
- Start (S10) eines Betriebsystems des Computers,
- Aufruf (S11) einer der Basis-Systemfunktionen durch das Betriebssystem oder eine Anwendung,
- Auslösen (513) eines Systemverwaltungs-Interrupts veranlasst durch das Basis-Systemprogramm, wobei eine Zentralrecheneinheit des Computers in einen System- verwaltungs-Betriebszustand übergeht, in dem eine Adresslogik der Zentralrecheneinheit einen Arbeitsspeicher des Computers als einen linearen Adressraum (3) adressiert,
- Ausführen (S14) von in den linearen Adressraum (3) kopierten Basis-Systemfunktionen des Basis-Systemprogramms und
- Versetzen (S18) der Zentralrecheneinheit in einen Normalbetriebszustand.

4. Verfahren nach Anspruch 3,
**dadurch gekennzeichnet, dass** das Auslösen (S13) des Systemverwaltungs-Interrupts durch einen Schreibzugriff auf ein Ein-/Ausgaberegister des Computers veranlasst wird.

5. Verfahren nach einem der vorhergehenden Ansprüche 3 oder 4,
**dadurch gekennzeichnet, dass** beim Aufruf (S11) der Basis-Systemfunktion über ein frei definierbares Interface ein Indexvektor hinterlegt wird, wobei der Indexvektor die Art der Basis-Systemfunktion festlegt.

6. Verfahren nach einem der vorhergehenden Ansprüche 3 bis 5,
**dadurch gekennzeichnet, dass** die Zentralrecheneinheit im Systemverwaltungs-Betriebszustand an einer vorbestimmten Startadresse in einem Basis- Speicherbereich (4) startet.

7. Verfahren nach Anspruch 5, **dadurch gekennzeichnet, dass** die Zuordnung zwischen Basis-Systemfunktion und Indexvektor über eine Verwaltungstabelle im Basis-Systemprogramm festgelegt ist.

8. Computerprogrammprodukt mit Programmcode zur Durchführung eines Verfahrens nach einem der Ansprüche 1 bis 7, wenn der Programmcode auf einem Prozessor abläuft.
